# FASCICULE DE BREVET EUROPEEN

(11) **EP 2 818 822 B1**
(45) Date de publication et mention de la délivrance du brevet: **16.03.2016**
(21) Numéro de dépôt: 14170284.5
(22) Date de dépôt: 28.05.2014
(51) Int. Cl.: F28F 27/00, F02B 29/04, F28F 27/02, F28D 1/04

(54) **Echangeur de chaleur équipant une ligne d'arrivée d'air d'un moteur à combustion interne**
Wärmetauscher, der in eine Luftzuführleitung eines Verbrennungsmotors eingebaut ist
Heat exchanger fitted on an air intake line of an internal combustion engine

(30) Priorité: 24.06.2013 FR 1355984
(43) Date de publication de la demande: 31.12.2014
(73) Titulaire: PEUGEOT CITROËN AUTOMOBILES SA, 78140 Vélizy-Villacoublay (FR)
(72) Inventeur: Frainet, Anthony, 78250 MEZY SUR SEINE (FR); Chardel, Fabrice, 94550 CHEVILLY LARUE (FR); Ferrand, Nicolas, 78500 SARTROUVILLE (FR)

(56) Documents cités:
- EP-A1- 2 357 351
- EP-A2- 0 632 246
- WO-A1-2008/048174
- WO-A1-2011/102784
- FR-A1- 2 976 322

## Description

L'invention porte sur une ligne d'arrivée d'air d'admission correspondant au préambule de la revendication 1. Une telle ligne est connue, par exemple, du document EP 2357351 A1.

Un véhicule automobile pourvu d'un moteur à combustion interne est couramment équipé d'un turbocompresseur pour fournir un air de suralimentation à une admission que comprend le moteur à combustion interne. Le turbocompresseur comprend une roue de turbine qui est logée à l'intérieur d'une ligne d'échappement du véhicule automobile et une roue de compresseur qui est logée à l'intérieur d'une ligne d'arrivée d'air du moteur à combustion interne. La roue de turbine et la roue de compresseur sont reliées l'une à l'autre par un axe de compresseur, de telle sorte qu'une mise en rotation de la roue de turbine par des gaz d'échappement, produits par le moteur à combustion interne et circulant à l'intérieur de la ligne d'échappement, provoquent la mise en rotation de la roue de compresseur. Une telle rotation de la roue de compresseur comprime l'air de suralimentation circulant à l'intérieur de la ligne d'arrivée d'air préalablement à son admission à l'intérieur du moteur à combustion interne.

La compression de l'air de suralimentation à l'admission du moteur à combustion interne provoque une augmentation de la température de cet air qui est susceptible d'être excessive. Pour abaisser la température de l'air de suralimentation préalablement à son admission à l'intérieur du moteur à combustion interne, il est connu de loger un échangeur de chaleur à l'intérieur de la ligne d'arrivée d'air en l'interposant entre la roue de compresseur et l'admission du moteur à combustion interne. L'échangeur de chaleur est traversé par l'air de suralimentation pour permettre un transfert thermique entre l'air de suralimentation et un fluide caloporteur qui circule à l'intérieur de l'échangeur de chaleur. Selon diverses variantes de réalisation, le fluide caloporteur est constitué d'air ou d'eau.

Un tel échange de chaleur est réalisé à l'intérieur d'une zone d'échange thermique qui comprend des parois externes de l'échangeur de chaleur. Le refroidissement de l'air de suralimentation au contact desdites parois externes est susceptible de générer des condensats qui se déposent, puis s'écoulent sur une face externe des parois externes de l'échangeur de chaleur. Il est souhaitable que de tels condensats ne parviennent pas à l'admission du moteur à combustion interne pour éviter une détérioration de ce dernier.

Le document EP 2 518 300 propose un échangeur de chaleur pour refroidir des gaz d'échappement. L'échangeur de chaleur comporte un canal de dérivation qui permet aux gaz d'échappement de contourner la zone d'échange thermique entre les gaz d'échappement et le fluide caloporteur circulant à l'intérieur de l'échangeur de chaleur. Un tel échangeur de chaleur est plus particulièrement agencé et dimensionné pour refroidir les gaz d'échappement et non un air de suralimentation.

De plus, une utilisation d'un tel échangeur de chaleur pour refroidir l'air de suralimentation est inadaptée. En effet, lorsque l'air de suralimentation emprunte le canal de dérivation, l'air de suralimentation parvient à l'admission à une température excessive, ce qui est susceptible d'endommager le moteur à combustion interne, ou tout au moins de diminuer des performances de ce dernier.

Un but de la présente invention est de proposer un échangeur de chaleur adapté pour refroidir un air de suralimentation en provenance d'une roue de compresseur d'un turbocompresseur, un tel échangeur de chaleur étant agencé pour minimiser la formation de condensats à l'intérieur d'une zone d'échange thermique que comprend l'échangeur de chaleur, la mise en oeuvre d'un tel échangeur de chaleur étant simple, efficace et adaptée à un air de suralimentation portée à diverses températures.

Un échangeur de chaleur d'une ligne d'arrivée d'air selon la présente invention est un échangeur de chaleur destiné à refroidir un flux d'air de suralimentation alimentant une admission d'un moteur à combustion interne équipant un véhicule automobile. L'échangeur de chaleur comprend des tubes interposés entre un premier collecteur et un deuxième collecteur.

Selon la présente invention, les tubes comprennent des tubes de premier type délimitant conjointement un premier volume interne de passage du flux d'air de suralimentation et des tubes de deuxième type délimitant conjointement un deuxième volume interne de passage du flux d'air de suralimentation, qui est distinct du premier volume interne de passage du flux d'air de suralimentation.

Le premier collecteur comprend avantageusement un premier compartiment en relation fluidique avec les tubes de premier type et un deuxième compartiment en relation fluidique avec les tubes de deuxième type, le premier compartiment et le deuxième compartiment étant étanches l'un avec l'autre tandis que le deuxième collecteur est en relation fluidique avec les tubes de premier type et les tubes de deuxième type.

Selon une forme de réalisation de l'échangeur de chaleur, l'échangeur de chaleur comprend des tubes de troisième type qui sont exempts d'ailettes de refroidissement.

Préférentiellement et selon ladite forme de réalisation, le premier collecteur est en relation fluidique avec les tubes de premier type, les tubes de deuxième type et les tubes de troisième type tandis que le deuxième collecteur comprend un premier caisson en relation fluidique avec les tubes de premier type, un deuxième caisson en relation fluidique avec les tubes de deuxième type et un troisième caisson en relation fluidique avec les tubes de troisième type, le premier caisson, le deuxième caisson et le troisième caisson étant étanches les uns par rapport aux autres.

Une ligne d'arrivée d'air de la présente invention est une ligne d'arrivée d'air équipant l'admission du moteur à combustion interne du véhicule automobile, qui est principalement reconnaissable en ce que la ligne d'arrivée d'air loge un tel échangeur de chaleur.

Selon une première variante de réalisation, le premier compartiment comporte une première arrivée en relation fluidique avec une première évacuation que comprend une vanne et en ce que le deuxième compartiment comporte une deuxième arrivée en relation fluidique avec une deuxième évacuation de la vanne, la vanne comportant une bouche d'admission en relation avec une sortie d'air de suralimentation que comprend une roue de compresseur.

Selon la première variante de réalisation, la vanne est préférentiellement interposée entre l'échangeur de chaleur et la sortie d'air de suralimentation.

Selon une deuxième variante de réalisation, le premier caisson comporte un premier orifice en relation fluidique avec une première voie que comporte une valve, le deuxième caisson comporte un deuxième orifice qui est en relation fluidique avec une deuxième voie de la valve et le troisième caisson comporte un troisième orifice qui est en relation fluidique avec une sortie d'air de suralimentation que comprend une roue de compresseur.

Selon la deuxième variante de réalisation, la valve est interposée entre l'échangeur de chaleur et l'admission du moteur à combustion interne.

Un procédé de mise en oeuvre d'une ligne d'arrivée d'air selon la première variante de réalisation est principalement caractérisé en ce que la première évacuation est ouverte et la deuxième évacuation est fermée si une température extérieure est inférieure à une première température-seuil, et en ce que la première évacuation est fermée et la deuxième évacuation est ouverte si la température extérieure est comprise entre la première température-seuil et une deuxième température-seuil, et en ce que la première évacuation et la deuxième évacuation sont ouvertes si la température extérieure est supérieure à la deuxième température-seuil.

Un procédé de mise en oeuvre d'une ligne d'arrivée d'air selon la deuxième variante de réalisation est principalement caractérisé en ce que la première voie est ouverte et la deuxième voie est fermée si la température extérieure est inférieure à une première température-seuil, et en ce que la première voie est fermée et la deuxième voie est ouverte si la température extérieure est comprise entre la première température-seuil et la deuxième température-seuil, et en ce que la première voie et la deuxième voie sont ouvertes si la température extérieure est supérieure à la deuxième température-seuil.

D'autres caractéristiques et avantages de la présente invention apparaîtront à la lecture de la description qui va en être faite d'exemples de réalisation, en relation avec les figures des planches annexées, dans lesquelles :
- La figure 1 est une vue schématique d'un échangeur de chaleur de la présente invention qui est installé sur une ligne d'arrivée d'air d'un moteur à combustion interne équipant un véhicule automobile.
- Les figures 2 à 4 sont des vues schématiques d'une première variante de réalisation de l'échangeur de chaleur représenté sur la figure précédente selon diverses modalités d'utilisation.
- Les figures 5 à 7 sont des vues schématiques d'une deuxième variante de réalisation de l'échangeur de chaleur représenté sur la figure 1 selon diverses modalités d'utilisation.

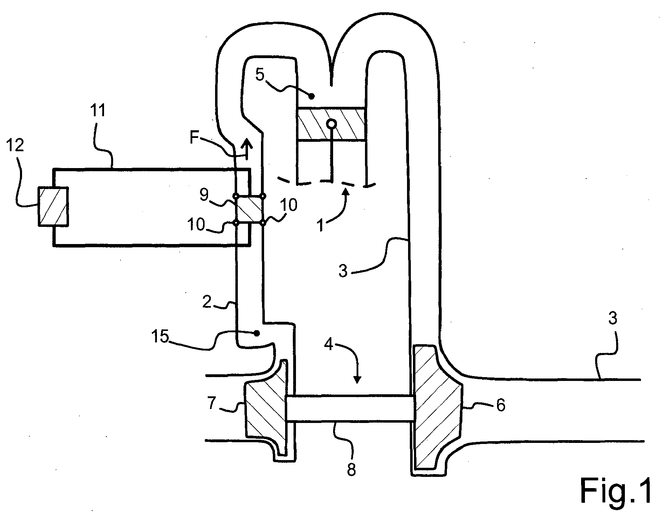

Sur la figure 1, un moteur à combustion interne 1 équipe un véhicule automobile pour permettre un déplacement de ce dernier. Le moteur à combustion interne 1 est pourvu d'une ligne d'arrivée d'air 2 pour son alimentation en air et d'une ligne d'échappement 3 pour évacuer des gaz d'échappement produits par le moteur à combustion 1 hors du véhicule automobile. Le moteur à combustion interne 1 est équipé d'un turbocompresseur 4 pour fournir un flux d'air de suralimentation F à une admission 5 du moteur à combustion interne 1. Le turbocompresseur 4 comprend une roue de turbine 6 qui est logée à l'intérieur de la ligne d'échappement 3 et une roue de compresseur 7 qui est logée à l'intérieur de la ligne d'arrivée d'air. La roue de turbine 6 et la roue de compresseur 7 sont axialement reliées l'une à l'autre de telle sorte qu'une mise en rotation de la roue de turbine 6 provoque une mise en rotation de la roue de compresseur 7. Ces dispositions visent à porter à haute pression le flux air de suralimentation F à l'admission 5 du moteur à combustion interne 1.

Pour éviter un accroissement de la température du flux d'air de suralimentation F, un échangeur de chaleur 9 est disposé à l'intérieur de la ligne d'arrivée d'air 2 en étant interposé entre la roue de compresseur 7 et l'admission 5. L'échangeur de chaleur 9 est équipé de moyens de maintien 10 à l'intérieur de la ligne d'arrivée d'air 2. De tels moyens de maintien 10 sont indifféremment constitués de moyens de maintien par emboîtement, par vissage, par clipage ou analogue. L'échangeur de chaleur 9 est destiné à capter des calories au flux d'air de suralimentation F pour refroidir ce dernier préalablement à son admission à l'intérieur du moteur à combustion interne 1. Ces calories sont captées par un fluide caloporteur, préférentiellement constitué d'air extérieur, qui traverse l'échangeur de chaleur 9 ou qui circule à l'intérieur d'un circuit de refroidissement 11 de l'échangeur de chaleur 9, le circuit de refroidissement 11 comprenant alors un aérotherme 12 qui est à même d'évacuer les calories captées.

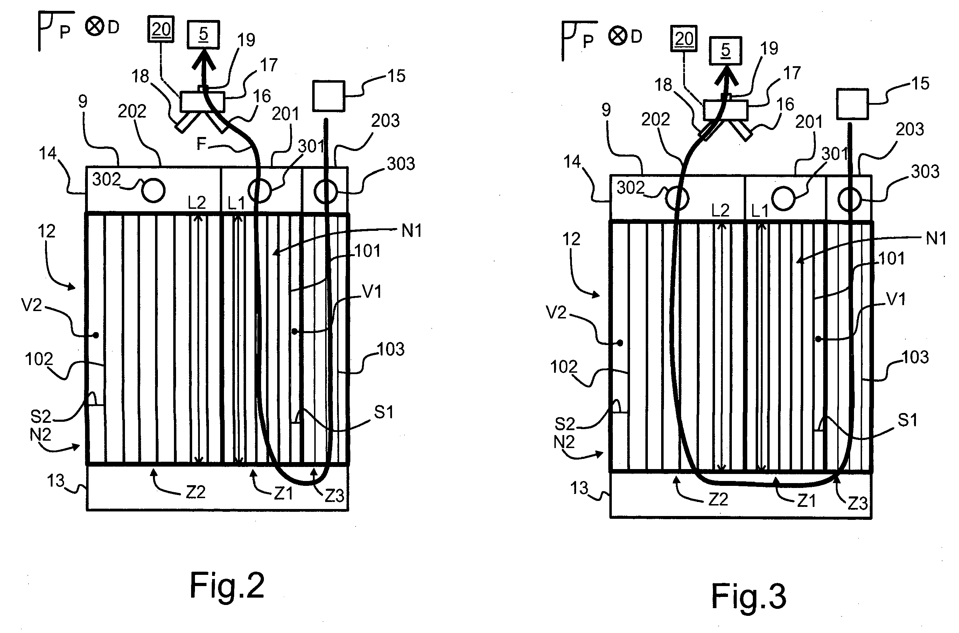

Sur les figures 2 à 7, l'échangeur de chaleur 9 est globalement ménagé à l'intérieur d'un plan P qui est orthogonal à une direction D d'écoulement du fluide caloporteur. L'échangeur de chaleur 9 comprend une surface d'entrée d'air 12 qui est la surface à travers laquelle le flux d'air de suralimentation F pénètre à l'intérieur de l'échangeur de chaleur 9.

Selon la présente invention, la surface d'entrée d'air 12 comprend au moins deux zones distinctes, dont une première zone Z₁ comprenant des tubes de premier type 101 délimitant conjointement un premier volume interne de passage V₁ du flux d'air de suralimentation F et une deuxième zone Z₂ comprenant des tubes de deuxième type 102 délimitant conjointement un deuxième volume interne de passage V₂ du flux d'air de suralimentation F, qui est distinct du premier volume interne de passage V₁ du flux d'air de suralimentation F. Les tubes de premier type 101 et les tubes de deuxième type 102 sont préférentiellement différents les uns des autres en ce qui concerne leur dimension, à savoir leur longueur et/ou leur section de passage du flux d'air de suralimentation F. Les tubes de premier type 101 et les tubes de deuxième type 102 sont aussi susceptibles d'être en nombre différent des uns des autres. Les tubes de premier type 101 et les tubes de deuxième type 102 sont ménagés parallèlement les uns aux autres.

Ces dispositions sont telles que les tubes de premier type 101 et les tubes de deuxième type 102 sont dimensionnés sur des températures respectives du flux d'air de suralimentation F conduisant à la formation de condensats qui sont distinctes l'une de l'autre. Les tubes de premier type 101 et les tubes de deuxième type 102 sont préférentiellement équipés d'ailettes de refroidissement pour faciliter un échange thermique entre le flux d'air de suralimentation F et le fluide caloporteur. Selon la variante illustrée, les tubes de premier type 101 et les tubes de deuxième type 102 présentent des sections de passage respectives S₁, S₂ du fluide de suralimentation F qui sont distinctes les unes des autres. Selon une autre variante, les tubes de premier type 101 sont en un premier nombre N₁ qui est distinct d'un deuxième nombre N₂ de tubes de deuxième type 102. Selon encore une autre variante, les tubes de premier type 101 et les tubes de deuxième type 102 présentent des longueurs respectives L₁, L₂ qui sont distinctes l'une de l'autre. Selon l'une quelconque au moins des caractéristiques ci-dessus mentionnées des tubes de premier type 101 et des tubes de deuxième type 102, prises seules ou en combinaison, le premier volume interne de passage V₁ formé ensemble par les tubes de premier type 101 est inférieur au deuxième volume interne de passage V2 formé ensemble par les tubes de deuxième type 102. En offrant un volume de passage distinct d"une zone à l'autre, l'échangeur de chaleur 9 permet des échanges thermiques distincts d'une zone à l'autre et consécutivement des températures respectives du flux d'air de suralimentation F conduisant à la formation de condensats qui sont distinctes l'une de l'autre.

Selon la variante de réalisation illustrée sur les figures 2 à 4, la surface d'entrée d'air 12 comprend une troisième zone Z₃ qui comprend des tubes de troisième type 103 qui sont exempts d'ailettes de refroidissement. Les tubes de troisième type 103 sont ménagés parallèlement aux tubes de premier type 101 et aux tubes de deuxième type 102.

Les tubes de premier type 101, les tubes de deuxième type 102 et les tubes de troisième type 103 sont disposés parallèlement les uns aux autres à l'intérieur du plan P en étant interposés entre un premier collecteur 13 et un deuxième collecteur 14.

Selon une première forme de réalisation de la présente invention, le premier collecteur 13 est en communication fluidique avec l'ensemble des tubes de premier type 101, des tubes de deuxième type 102 et des tubes de troisième type 103 tandis que le deuxième collecteur 14 comporte un premier caisson 201 en relation fluidique avec les tubes de premier type 101, un deuxième caisson 202 en relation avec les tubes de deuxième type 102 et un troisième caisson 203 en relation fluidique avec les tubes de troisième type 103, les caissons 201,202,203 étant étanches les uns par rapport aux autres. Le premier caisson 201 comporte un premier orifice 301, le deuxième caisson 202 comporte un deuxième orifice 302 et le troisième caisson 203 comporte un troisième orifice 303. En position d'utilisation de l'échangeur de chaleur 9, le troisième orifice 303 est en relation fluidique avec une sortie d'air de suralimentation 15 que comprend la roue de compresseur 7. Le premier orifice 301 est en relation avec une première voie d'entrée 16 d'une valve 17 tandis que le deuxième orifice 302 est en relation avec une deuxième voie d'entrée 18 de la valve 17. La valve 17 comprend également une voie de sortie 19 qui est en relation avec l'admission 5 du moteur à combustion interne 1.

La valve 17 est disjointe de l'échangeur de chaleur 9 et est susceptible d'être rapportée sur le moteur à combustion interne 1 en étant totalement dissociée de l'échangeur de chaleur 9 qui forme alors un composant passif. La valve 17 disposée à l'intérieur de la ligne d'arrivée d'air 2 en étant interposée entre l'échangeur de chaleur 9 et l'admission 5. La valve 17 est commandée par un dispositif de commande 20 qui est en relation avec un capteur de température extérieur et un capteur de charge du moteur à combustion interne 1.

Lorsque la température extérieure est inférieure à une première température-seuil, par exemple de 5°C, et que le moteur à combustion interne 1 subit une première charge, identifiée comme faible, le dispositif de commande 20 agit sur la valve 17 de telle sorte que la première voie 16 est ouverte et la deuxième voie 18 est fermée. Il en résulte que le flux d'air de suralimentation F s'écoule depuis le troisième orifice 303 pour s'écouler à travers les tubes de troisième type 103, puis pénètre à l'intérieur du premier collecteur 13, puis s'écoule à l'intérieur des tubes de premier type 101, pour rejoindre le premier caisson 201, puis la première voie 16 et enfin l'admission 5, tel qu'illustré sur la figure 2. Il en résulte que l'efficacité de l'échangeur de chaleur 9 est minimisée à partir d'un faible refroidissement du flux d'air de suralimentation F ce qui est acceptable pour le moteur à combustion interne 1 en raison d'une faible température extérieure et d'une faible charge du moteur à combustion interne 1, un tel échange de chaleur se produisant sans formation de condensats.

Lorsque la température extérieure est supérieure à la première température-seuil et inférieure à une deuxième température-seuil, par exemple en étant comprise entre 5°C et 15°C, et que le moteur à combustion interne 1 est toujours soumis à la première charge, identifiée comme faible, le dispositif de commande 20 agit sur la valve 17 de telle sorte que la première voie 16 est fermée et la deuxième voie 18 est ouverte. Il en résulte que le flux d'air de suralimentation F s'écoule depuis le troisième orifice 303 pour s'écouler à travers les tubes de troisième type 103, puis pénètre à l'intérieur du premier collecteur 13, puis s'écoule à l'intérieur des tubes de deuxième type 102, pour rejoindre le deuxième caisson 202, puis la deuxième voie 18 et enfin l'admission 5, tel qu'illustré sur la figure 3. Il en résulte que l'efficacité de l'échangeur de chaleur 9 est optimisée à partir d'un refroidissement adapté du flux d'air de suralimentation F à une température modérée de l'air extérieur et à une faible charge du moteur à combustion interne 1, un tel échange de chaleur se produisant sans formation de condensats.

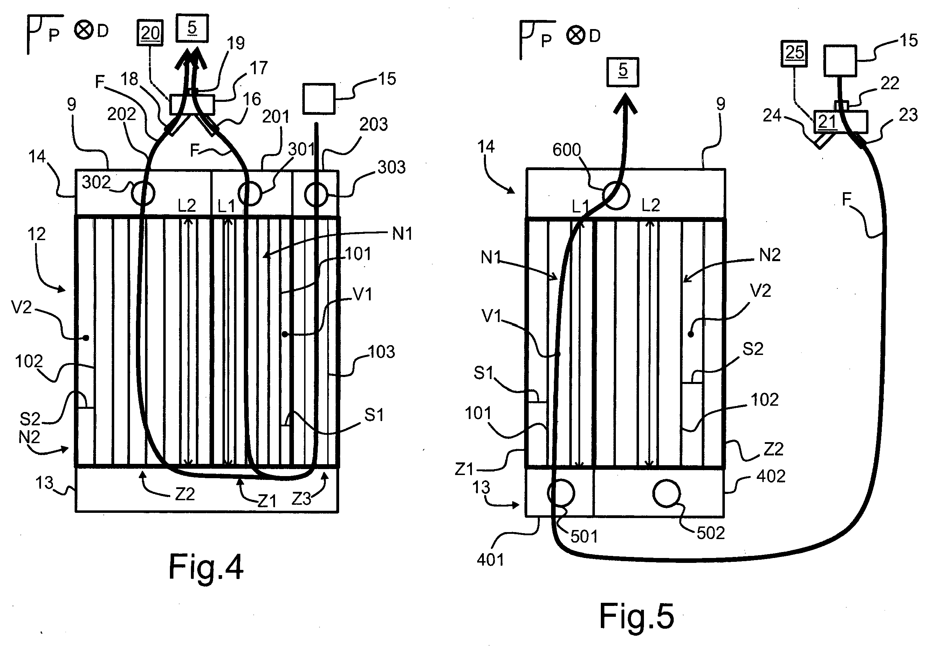

Lorsque la température extérieure est supérieure à la deuxième température-seuil, par exemple en étant supérieure à 15°C, et quel que soit la charge subie par le moteur à combustion interne 1, indifféremment de l'ordre de la première charge ou supérieure à la première charge, le dispositif de commande 20 agit sur la valve 17 de telle sorte que la première voie 16 et la deuxième voie 18 sont ouvertes. Il en résulte que le flux d'air de suralimentation F s'écoule depuis le troisième orifice 303 pour s'écouler à travers les tubes de troisième type 103, puis pénètre à l'intérieur du premier collecteur 13, puis s'écoute à l'intérieur des tubes de premier type 101 et des tubes de deuxième type 102, pour rejoindre le premier caisson 201 et le deuxième caisson 202, puis la première voie 16 et la deuxième voie 18 et enfin l'admission 5, tel qu'illustré sur la figure 4. Il en résulte que l'efficacité de l'échangeur de chaleur 9 est optimisée à partir d'un refroidissement maximalisé du flux d'air de suralimentation F en raison d'une température élevée de l'air extérieur, un tel échange de chaleur se produisant sans formation de condensats.

Sur les figures 5 à 7, le premier collecteur 13 comprend un premier compartiment 401 en relation fluidique avec les tubes de premier type 101 et un deuxième compartiment 402 en relation fluidique avec les tubes de deuxième type 102, le premier compartiment 401 et le deuxième compartiment 402 étant étanches l'un de l'autre. Le premier compartiment 401 est pourvu d'une première arrivée 501 tandis que le deuxième compartiment 402 est pourvu d'une deuxième arrivée 502.

Le deuxième collecteur 14 est quant à lui en relation fluidique avec les tubes de premier type 101 et les tubes de deuxième type 102. Le deuxième collecteur 14 est pourvu d'une sortie 600 qui est en relation fluidique avec l'admission 5.

Une vanne 21 est interposée entre la sortie d'air de suralimentation 15 que comprend la roue de compresseur 7 et l'échangeur de chaleur 9. La vanne 21 est pourvue d'une bouche d'admission 22 en relation fluidique avec la sortie d'air de suralimentation 15. La vanne 21 est également pourvue d'une première évacuation 23 et d'une deuxième évacuation 24. La vanne 21 est commandée par des moyens de commande 25 pour autoriser un passage d'air à travers la première évacuation 23 et/ou la deuxième évacuation 24. La première évacuation 23 est en relation fluidique avec la première arrivée 501 tandis que la deuxième évacuation 24 est en relation fluidique avec la deuxième arrivée 502.

Lorsque la température extérieure est inférieure à la première température-seuil, par exemple de 5°C, et que le moteur à combustion hterne 1 subit une première charge, identifiée comme faible, les moyens de commande 25 agissent sur la vanne 21 de telle sorte que la première évacuation 23 est ouverte et la deuxième évacuation 24 est fermée. Il en résulte que le flux d'air de suralimentation F s'écoule depuis la bouche d'admission 22 jusqu'à la première évacuation 23 puis jusqu'à la première arrivée 501 pour s'écouler ensuite à l'intérieur des tubes de premier type 101, pour rejoindre le deuxième collecteur 14 et enfin l'admission 5, tel qu'illustré sur la figure 5. Il en résulte que l'efficacité de l'échangeur de chaleur 9 est minimisée à partir d'un faible refroidissement du flux d'air de suralimentation F ce qui est acceptable pour le moteur à combustion interne 1 en raison d'une faible température extérieure et d'une faible charge subie par le moteur à combustion interne 1, un tel échange de chaleur se produisant sans formation de condensats.

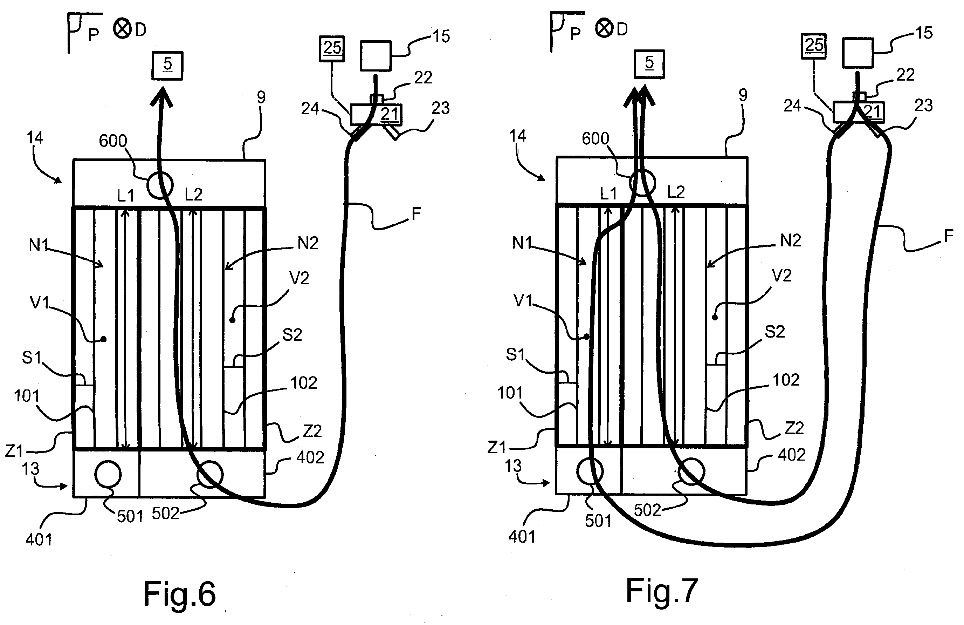

Lorsque la température extérieure est supérieure à la première température-seuil et inférieure à la deuxième température-seuil, par exemple en étant comprise entre 5°C et 15°C, et que le moteur à combustion interne 1 subit une faible charge, identifiée comme faible, les moyens de commande 25 agissent sur la vanne 21 de telle sorte que la première évacuation 23 est fermée et la deuxième évacuation 24 est ouverte. Il en résulte que le flux d'air de suralimentation F s'écoule depuis la bouche d'admission 22 jusqu'à la deuxième évacuation 24 puis jusqu'à la deuxième arrivée 502 pour s'écouler ensuite à l'intérieur des tubes de deuxième type 102, pour rejoindre le deuxième collecteur 14 et enfin l'admission 5, tel qu'illustré sur la figure 6. Il en résulte que l'efficacité de l'échangeur de chaleur 9 est optimisée à partir d'un refroidissement adapté du flux d'air de suralimentation F à une température modérée de l'air extérieur et d'une faible charge subie par le moteur à combustion interne 1, un tel échange de chaleur se produisant sans formation de condensats.

Lorsque la température extérieure est supérieure à la deuxième température-seuil, par exemple en étant supérieure à 15°C, et quel que soit la charge subie par le moteur à combustion interne 1, indifféremment de l'ordre de la première charge ou supérieure à la première charge, les moyens de commande 25 agissent sur la vanne 21 de telle sorte que la première évacuation 23 et la deuxième évacuation 24 sont ouvertes. Il en résulte que le flux d'air de suralimentation F s'écoule depuis la bouche d'admission 22, puis à travers la première évacuation 23 et la deuxième évacuation 24, puis pénètre à l'intérieur du premier collecteur 13 par l'intermédiaire de la première arrivée 501 et de la deuxième arrivée 502, puis s'écoule à l'intérieur des tubes de premier type 101 et des tubes de deuxième type 102, pour rejoindre le deuxième collecteur 14, puis la sortie 600 et enfin l'admission 5, tel qu'illustrée sur la figure 7. Il en résulte que l'efficacité de l'échangeur de chaleur 9 est optimisée à partir d'un refroidissement maximalisé du flux d'air de suralimentation F en raison d'une température élevée de l'air extérieur, un tel échange de chaleur se produisant sans formation de condensats.

L'ensemble de ces dispositions visent à maintenir une température du flux d'air de suralimentation F à l'intérieur d'une plage de température-cible qui est suffisamment haute pour que la température du flux d'air de suralimentation F soit supérieure à une température de vapeur d'eau saturante, sans être trop haute pour que le moteur à combustion interne 1 perde en puissance, ni que la production d'oxydes d'azote NOx soit trop importante pour un moteur à combustion interne de type Diesel et sans dépasser un seuil de cliquetis pour un moteur à combustion interne 1 de type essence. Il en découle finalement qu'outre la prise en compte de la température du flux d'air extérieur pour commander la valve 17 et/ou la vanne 21, il est possible de prendre en compte la charge subie par le moteur à combustion interne 1 par rapport à un niveau de suralimentation de ce dernier, un régime moteur par rapport à un débit de suralimentation de ce dernier, une hygrométrie de l'air extérieur, une vitesse de déplacement du flux d'air de suralimentation F, un historique d'une utilisation de la valve 17 et/ou de la vanne 21.

## Revendications

1. Ligne d'arrivée d'air (2) équipant l'admission (5) d'un moteur à combustion interne (1) d'un véhicule automobile, la ligne d'arrivée d'air (2) logeant un échangeur de chaleur (9) (9) destiné à refroidir un flux d'air de suralimentation (F) alimentant une admission (5) d'un moteur à combustion interne (1) équipant un véhicule automobile, l'échangeur de chaleur (9) comprenant des tubes (101,102,103) interposés entre un premier collecteur (13) et un deuxième collecteur (14), la ligne d'arrivée d'air (2) étant **caractérisée en ce que** les tubes (101,102,103) comprennent des tubes de premier type (101) délimitant conjointement un premier volume interne de passage (V₁) du flux d'air de suralimentation (F) et des tubes de deuxième type (102) délimitant conjointement un deuxième volume interne de passage (V₂) du flux d'air de suralimentation (F), qui est distinct du premier volume interne de passage (V₁) du flux d'air de suralimentation (F).

2. Ligne d'arrivée d'air (2) selon la revendication précédente, **caractérisée en ce que** le premier collecteur (13) comprend un premier compartiment (401) en relation fluidique avec les tubes de premier type (101) et un deuxième compartiment (402) en relation fluidique avec les tubes de deuxième type (102), le premier compartiment (401) et le deuxième compartiment (402) étant étanches l'un avec l'autre tandis que le deuxième collecteur (14) est en relation fluidique avec les tubes de premier type (101) et les tubes de deuxième type (102).

3. Ligne d'arrivée d'air (2) selon l'une des revendications précédentes, **caractérisée en ce que** l'échangeur de chaleur (9) comprend des tubes de troisième type (103) qui sont exempts d'ailettes de refroidissement.

4. Ligne d'arrivée d'air (2) selon la revendication précédente, **caractérisée en ce que** le premier collecteur (13) est en relation fluidique avec les tubes de premier type (101), les tubes de deuxième type (102) et les tubes de troisième type (103) tandis que le deuxième collecteur (14) comprend un premier caisson (201) en relation fluidique avec les tubes de premier type (101), un deuxième caisson (202) en relation fluidique avec les tubes de deuxième type (102) et un troisième caisson (203) en relation fluidique avec les tubes de troisième type (103), le premier caisson (201), le deuxième caisson (202) et le troisième caisson (203) étant étanches les uns par rapport aux autres.

5. Ligne d'arrivée d'air (2) selon la revendication 2, **caractérisée en ce que** le premier compartiment (401) comporte une première arrivée (501) en relation fluidique avec une première évacuation (23) que comprend une vanne (21) et **en ce que** le deuxième compartiment (502) comporte une deuxième arrivée (502) en relation fluidique avec une deuxième évacuation (24) de la vanne (21), la vanne (21) comportant une bouche d'admission (22) en relation avec une sortie d'air de suralimentation (15) que comprend une roue de compresseur (7).

6. Ligne d'arrivée d'air (2) selon la revendication 5, **caractérisée en ce que** la vanne (21) est interposée entre l'échangeur de chaleur (9) et la sortie d'air de suralimentation (15).

7. Ligne d'arrivée d'air (2) selon la revendication 4, **caractérisée en ce que** le premier caisson (201) comporte un premier orifice (301) en relation fluidique avec une première voie (16) que comporte une valve (17) et **en ce que** le deuxième caisson (202) comporte un deuxième orifice (302) qui est en relation fluidique avec une deuxième voie (18) de la valve (17) et **en ce que** le troisième caisson (203) comporte un troisième orifice (303) qui est en relation fluidique avec une sortie d'air de suralimentation (15) que comprend une roue de compresseur (7).

8. Ligne d'arrivée d'air (2) selon la revendication 7, **caractérisée en ce que** la valve (17) est interposée entre l'échangeur de chaleur (9) et l'admission (5) du moteur à combustion interne (1).

9. Procédé de mise en oeuvre d'une ligne d'arrivée d'air (2) selon l'une quelconque des revendications 5 et 6, **caractérisé en ce que** la première évacuation (23) est ouverte et la deuxième évacuation (24) est fermée si une température extérieure est inférieure à une première température-seuil, et **en ce que** la première évacuation (23) est fermée et la deuxième évacuation (24) est ouverte si la température extérieure est comprise entre la première température-seuil et une deuxième température-seuil, et **en ce que** la première évacuation (23) et la deuxième évacuation (24) sont ouvertes si la température extérieure est supérieure à la deuxième température-seuil.

10. Procédé de mise en oeuvre d'une ligne d'arrivée d'air (2) selon l'une quelconque des revendications 7 et 8, **caractérisé en ce que** la première voie (16) est ouverte et la deuxième voie (18) est fermée si la température extérieure est inférieure à une première température-seuil, et **en ce que** la première voie (16) est fermée et la deuxième voie (18) est ouverte si la température extérieure est comprise entre la première température-seuil et la deuxième température-seuil, et **en ce que** la première voie (16) et la deuxième voie (18) sont ouvertes si la température extérieure est supérieure à la deuxième température-seuil.

## Patentansprüche

1. Luftzuführleitung (2), die den Einlass (5) eines Verbrennungsmotors (1) eines Kraftfahrzeugs ausstattet, wobei die Luftzuführleitung (2) einen Wärmetauscher (9) aufnimmt, der dazu bestimmt ist, den Aufladeluftstrom (F) zu kühlen, der einen Einlass (5) eines Verbrennungsmotors (1), der ein Kraftfahrzeug ausstattet, versorgt, wobei der Wärmetauscher (9) Rohre (101, 102, 103) umfasst, die zwischen einen ersten Sammler (13) und einen zweiten Sammler (14) eingefügt sind, Luftzuführleitung (2) **dadurch gekennzeichnet, dass** die Rohre (101, 102, 103) Rohre eines ersten Typs (101) umfassen, die gemeinsam ein erstes Durchgangsinnenvolumen (V₁) des Aufladeluftstroms (F) abgrenzen, und Rohre eines zweiten Typs (102), die gemeinsam ein zweites Durchgangsinnenvolumen (V₂) des Aufladeluftstroms (F) abgrenzen, das von dem ersten Durchgangsinnenvolumen (V₁) des Aufladeluftstroms (F) getrennt ist.

2. Luftzuführleitung (2) nach dem vorhergehenden Anspruch, **dadurch gekennzeichnet, dass** der erste Sammler (13) einen ersten Raum (401) in Fluidverbindung mit den Rohren des ersten Typs (101) und einen zweiten Raum (402) in Fluidverbindung mit den Rohren des zweiten Typs (102) umfasst, wobei der erste Raum (401) und der zweite Raum (402) untereinander dicht sind, während der zweite Sammler (14) in Fluidverbindung mit den Rohren des ersten Typs (101) und den Rohren des zweiten Typs (102) steht.

3. Luftzuführleitung (2) nach einem der vorhergehenden Ansprüche, **dadurch gekennzeichnet, dass** der Wärmetauscher (9) Rohre eines dritten Typs (103) umfasst, die keine Kühlrippen haben.

4. Luftzuführleitung (2) nach dem vorhergehenden Anspruch, **dadurch gekennzeichnet, dass** der erste Sammler (13) in Fluidverbindung mit den Rohren des ersten Typs (101), den Rohren des zweiten Typs (102) und den Rohren des dritten Typs (103) steht, während der zweite Sammler (14) einen ersten Kasten (201) in Fluidverbindung mit den Rohren des ersten Typs (101), einen zweiten Kasten (202) in Fluidverbindung mit den Rohren des zweiten Typs (102) und einen dritten Kasten (203) in Fluidverbindung mit den Rohren des dritten Typs (103) umfasst, wobei der erste Kasten (201), der zweite Kasten (202) und der dritte Kasten (203) untereinander dicht sind.

5. Luftzuführleitung (2) nach Anspruch 2, **dadurch gekennzeichnet, dass** der erste Raum (401) einen ersten Einlass (501) in Fluidverbindung mit einer ersten Ableitung (23) umfasst, die in einem Ventil (21) enthalten ist, und dass der zweite Raum (502) einen zweiten Einlass (502) in Fluidverbindung mit einer zweiten Ableitung (24) des Ventils (21) umfasst, wobei das Ventil (21) eine Einlassöffnung (22) in Verbindung mit einem Aufladeluftauslass (15), der ein Verdichterrad (7) umfasst, umfasst.

6. Luftzuführleitung (2) nach Anspruch 5, **dadurch gekennzeichnet, dass** das Ventil (21) zwischen den Wärmetauscher (9) und den Aufladeluftauslass (15) eingefügt ist.

7. Luftzuführleitung (2) nach Anspruch 4, **dadurch gekennzeichnet, dass** der erste Kasten (201) eine erste Öffnung (301) in Fluidverbindung mit einem ersten Kanal (16), der in einem Ventil (17) enthalten ist, umfasst, und dass der zweite Kasten (202) eine zweite Öffnung (302), die mit einem zweiten Kanal (18) des Ventils (17) in Fluidverbindung steht, umfasst, und dass der dritte Kasten (203) eine dritte Öffnung (303) umfasst, die mit einem Aufladeluftauslass (15), den das Verdichterrad (7) umfasst, in Fluidverbindung steht.

8. Luftzuführleitung (2) nach Anspruch 7, **dadurch gekennzeichnet, dass** das Ventil (17) zwischen den Wärmetauscher (9) und den Einlass (5) des Verbrennungsmotors (1) eingefügt ist.

9. Verfahren zum Umsetzen einer Luftzuführleitung (2) nach einem der Ansprüche 5 und 6, **dadurch gekennzeichnet, dass** die erste Ableitung (23) offen ist und die zweite Ableitung (24) geschlossen ist, falls eine Außentemperatur niedriger ist als eine erste Schwellentemperatur, und dass die erste Ableitung (23) geschlossen ist und die zweite Ableitung (24) offen ist, falls die Außentemperatur zwischen der ersten Schwellentemperatur und einer zweiten Schwellentemperatur liegt, und dass die erste Ableitung (23) und die zweite Ableitung (24) offen sind, falls die Außentemperatur größer ist als die zweite Schwellentemperatur.

10. Verfahren zum Umsetzen einer Luftzuführleitung (2) nach einem der Ansprüche 7 und 8, **dadurch gekennzeichnet, dass** der erste Kanal (16) offen ist und der zweite Kanal (18) geschlossen ist, falls die Außentemperatur niedriger ist als eine erste Schwellentemperatur, und dass der erste Kanal (16) geschlossen ist und der zweite Kanal (18) offen ist, falls die Außentemperatur zwischen der ersten Schwellentemperatur und der zweiten Schwellentemperatur liegt, und dass der erste Kanal (16) und der zweite Kanal (18) offen sind, falls die Außentemperatur größer ist als die zweite Schwellentemperatur.

## Claims

1. An air intake line (2) equipping the intake (5) of an internal combustion engine (1) of a motor vehicle, the air intake line (2) housing a heat exchanger (9) intended to cool a flow of charge air (F) supplying an intake (5) of an internal combustion engine (1) equipping a motor vehicle, the heat exchanger (9) including tubes (101, 102, 103) interposed between a first manifold (13) and a second manifold (14), the air intake line (2) being **characterized in that** the tubes (101, 102, 103) include tubes of a first type (101) delimiting jointly a first internal passage volume (V₁) of the flow of charge air (F) and tubes of a second type (102) delimiting jointly a second internal passage volume (V₂) of the flow of charge air (F), which is distinct from the first internal passage volume (V₁) of the flow of charge air (F).

2. The air intake line (2) according to the preceding claim, **characterized in that** the first manifold (13) includes a first compartment (401) in fluidic relationship with the tubes of the first type (101) and a second compartment (402) in fluidic relationship with the tubes of the second type (102), the first compartment (401) and the second compartment (402) being sealed with respect to one another, whilst the second manifold (14) is in fluidic relationship with the tubes of the first type (101) and the tubes of the second type (102).

3. The air intake line (2) according to one of the preceding claims, **characterized in that** the heat exchanger (9) includes tubes of a third type (103) which are without cooling fins.

4. The air intake line (2) according to the preceding claim, **characterized in that** the first manifold (13) is in fluidic relationship with the tubes of the first type (101), the tubes of the second type (102) and the tubes of the third type (103), whilst the second manifold (14) includes a first box (201) in fluidic relationship with the tubes of the first type (101), a second box (202) in fluidic relationship with the tubes of the second type (102) and a third box (203) in fluidic relationship with the tubes of the third type (103), the first box (201), the second box (202) and the third box (203) being sealed with respect to one another.

5. The air intake line (2) according to Claim 2, **characterized in that** the first compartment (401) comprises a first intake (501) in fluidic relationship with a first outlet (23) which is included by a valve (21) and **in that** the second compartment (502) comprises a second intake (502) in fluidic relationship with a second outlet (24) of the valve (21), the valve (21) comprising an inlet (22) in relation with a charge air outlet (15) which is included by a compressor wheel (7).

6. The air intake line (2) according to Claim 5, **characterized in that** the valve (21) is interposed between the heat exchanger (9) and the charge air outlet (15).

7. The air intake line (2) according to Claim 4, **characterized in that** the first box (201) comprises a first orifice (301) in fluidic relationship with a first path (16) which is comprised by a valve (17) and **in that** the second box (202) comprises a second orifice (302) which is in fluidic relationship with a second path (18) of the valve (17) and **in that** the third box (203) comprises a third orifice (303) which is in fluidic relationship with a charge air outlet (15) which is included by a compressor wheel (7).

8. The air intake line (2) according to Claim 7, **characterized in that** the valve (17) is interposed between the heat exchanger (9) and the intake (5) of the internal combustion engine (1).

9. A method for implementing an air intake line (2) according to any one of Claims 5 and 6, **characterized in that** the first outlet (23) is open and the second outlet (24) is closed if an external temperature is less than a first threshold temperature, and **in that** the first outlet (23) is closed and the second outlet (24) is open if the external temperature is comprised between the first threshold temperature and a second threshold temperature, and **in that** the first outlet (23) and the second outlet (24) are open if the external temperature is greater than the second threshold temperature.

10. A method for implementing an air intake line (2) according to any one of claims 7 and 8, **characterized in that** the first path (16) is open and the second path (18) is closed if the external temperature is less than a first threshold temperature, and **in that** the first path (16) is closed and the second path (18) is open if the external temperature is comprised between the first threshold temperature and the second threshold temperature, and **in that** the first path (16) and the second path (18) are open if the external temperature is greater than the second threshold temperature.
